(19) [European Patent Office logo] Europäisches Patentamt / European Patent Office / Office européen des brevets

(11) **EP 4 470 988 A1**

(12) # EUROPEAN PATENT APPLICATION

(43) Date of publication:
**04.12.2024 Bulletin 2024/49**

(21) Application number: **23176438.2**

(22) Date of filing: **31.05.2023**

(51) International Patent Classification (IPC):
**C04B 28/04** (2006.01)    **C04B 18/14** (2006.01)
**C04B 28/06** (2006.01)

(52) Cooperative Patent Classification (CPC):
(C-Sets available)
**C04B 18/141; C04B 28/04; C04B 28/06**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ecocem Materials Limited
Dublin 3 D03E0C0 (IE)**

(72) Inventors:
• **ALFANI, Roberta
75012 PARIS (FR)**

• **KACI, Yasmine
75012 PARIS (FR)**
• **GERMAIN, Stéphane
75012 PARIS (FR)**
• **BOUARROUDJ, Mohamed Elkarim
75012 PARIS (FR)**

(74) Representative: **Plasseraud IP
104 Rue de Richelieu
CS92104
75080 Paris Cedex 02 (FR)**

(54) **GROUND GRANULATED BLAST FURNACE SLAG HAVING ENHANCED PROPERTIES**

(57)    The invention concerns a ground granulated blast furnace slag having a fineness comprised between 4500 Blaine and 6500 Blaine, characterized in that it has a $d_{50}$ between 7.5 $\mu$m and 12 $\mu$m and a dss between 19 $\mu$m and 29 $\mu$m.

[Fig. 1]

Legend: GGBS 5400 · GGBS New · GGBS 5400 · GGBS NEW

EP 4 470 988 A1

(52) Cooperative Patent Classification (CPC): (Cont.)

C-Sets
**C04B 28/04, C04B 18/141, C04B 22/143,
C04B 22/147, C04B 20/008;
C04B 28/06, C04B 7/02, C04B 18/141,
C04B 22/143, C04B 22/147, C04B 20/008**

**Description**

**Technical Field**

This disclosure pertains to the field of hydraulic binder compositions comprising Ground Granulated Blast Furnace Slag (GGBS) for preparing construction products. In particular, the technical field of the invention relates to hydraulic mineral binders including Ground Granulated Blast Furnace Slag (GGBS or slag), which are used in compositions able to set and harden, such as mortars and concretes.

**Background Art**

Ordinary Portland cement (OPC) production has a strong and negative impact on the environment due to the emissions of large quantities of carbon dioxide. The production of cement inherently generates $CO_2$ during the calcination of the raw materials at very high temperature (1450°C) in a furnace through decarbonation of the limestone (Eq. (1)):

$$CaCO_3 \text{ (s)} \rightarrow CaO \text{ (s)} + CO_2 \text{ (g)} \qquad (1)$$

In addition, carbon dioxide is released as a result of the combustion of the fossil fuels needed to heat the furnace. By adding the additional emissions of grinding, we obtain almost one ton of $CO_2$ per ton of Portland cement. Overall, the cement industry is responsible for 7 to 9% of the global carbon dioxide emissions.

The detrimental impact of the Portland cement is aggravated by its high demand in water for the complete hydration.

Moreover, handling Portland cement may lead to health issues (such as allergy) due, in particular, to its high alkalinity (pH higher than 13). In addition, hazardous elements as hexavalent Chromium (Cr (VI)) may be released upon kneading, which is also toxic for the workers. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which a by-product of iron industry. By grinding this product into fine powder (GGBS) one can obtain a cementitious material that can be used in partial substitution of cement or used alone by adding some chemical activators (such as alkalis or sulfates).

It is important to note that the use of a GGBS is not only environmentally friendly but also leads to several enhanced properties such as high resistance to sulfate attack, low permeability, good resistance in a chemically aggressive environment, low heat of hydration (required in massive structures), excellent durability in general, possibility of immobilization of heavy metals or radionuclides, etc.

Another benefit of GGBS based products is their low water demand to get appropriate rheological properties. This is also important from both environmental and societal point of view. Indeed, there is a dramatic reduction of water resources over the world, not only in and regions, leading, in particular, to geopolitical tensions and wars. In this regard the benefits of decreasing the amount kneading water used in cementitious is not anecdotal taking into account the huge amount of cementitious materials consumed over the world.

Hydraulic binders comprising GGBS in an amount between 36 and 95% by weight and Portland cement clinker are known as CEM III. Document WO 2011/055063 A1 discloses a hydraulic binder comprising two different types of GGBS, one having a fineness less than 6000 Blaine and one having a fineness equal or greater than 6000 Blaine. This hydraulic binder is able to overcome some disadvantages of the previous hydraulic binders comprising GGBS such as formation of an excess of ettringite or unreacted calcium sulphate which can cause undesirable expansions of a construction material obtained from said previous hydraulic binders, a consequence of which being a loss in strength and in durability.

Although these hydraulic binders give satisfaction regarding the addressed issues, hydraulic binders based on GGBS can be further improved, notably regarding rheology, setting time and water demand.

In this context, the invention aims at addressing at least one of the above problems and/or needs, through fulfilling at least one of the following objectives:

O1. Providing a slag-based binder or a mortar or concrete composition including said slag-based binder, which is attractive substitute to OPC-based compositions.

O2. Providing a slag-based binder or a mortar or concrete composition including said slag-based binder, which is more acceptable than OPC-based compositions, with respect to the sanitary and safety issues.

O3. Providing a slag-based binder or construction products, like mortars compositions, concretes compositions, dry concrete compositions and dry mortar compositions including said slag-based binder, which gives rise to wet formulations with appropriate rheological properties, i.e stable rheology (good workability) during the usual setting time (e.g. from some minutes to several hours) required by the users of said wet formulation, with a decrease in the W/B ratio and jeopardizing the mechanical properties of the hardened material obtained from this wet formulation.

O4. Providing a slag-based binder or a mortar or concrete composition including said slag-based binder, which gives rise to a hardened material with required mechanical properties, especially an acceptable early strength (for instance 24 hours).

O5. Providing a slag-based binder or a mortar or concrete composition including said slag-based binder, which gives rise to a hardened material with required durability.

## Summary

At least one of the above objectives is reached thanks to a Ground granulated blast furnace slag having a fineness comprised between 4500 Blaine and 6500 Blaine, characterized in that it has a $d_{50}$ between 7.5 $\mu$m and 12 $\mu$m and a $d_{85}$ between 19 $\mu$m and 29 $\mu$m.
The invention also concerns a hydraulic binder composition comprising the ground granulated blast furnace slag mentioned above.
The invention further concerns a dry industrial mortar composition or dry concrete composition, comprising at least one aggregate and the hydraulic binder composition mentioned above.
In another aspect, the invention is directed to a wet industrial mortar formulation or wet concrete formulation comprising at least one aggregate, the hydraulic binder composition mentioned above and water.
In yet another aspect, it is proposed a hardened industrial mortar product or hardened concrete product obtained from the wet industrial mortar formulation mentioned above.
The invention is also directed to a process for preparing the wet industrial mortar formulation mentioned above comprising a step of mixing with water, at least one aggregate and the hydraulic binder composition mentioned above, the hydraulic binder composition being prepared before the mixing step or in situ during the mixing step from different components of the hydraulic binder composition taken separately and/or under the form of premix(es).

## Definitions

According to the terminology of this text, the following non limitative definitions have to be taken into consideration:

"binder" refers to "hydraulic binder" meaning any material that hardens just by adding water, like cement.

"cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

"mortar" and "concrete" refers to a material composed of binder(s), aggregates such as sand and other components, like admixtures.

"Dry industrial mortar composition or dry concrete composition" refers to a material composed of binder(s), aggregates such as sand and gravel and other components, like admixtures.
"Wet industrial mortar formulation or wet concrete formulation" refers to a material composed of binder(s), aggregates such as sand and gravel and other components, like admixtures and water.
"Hardened industrial mortar product or hardened concrete product" refers to the hardened product obtained from wet industrial mortar composition after reaction and evaporation of the water.
"$d_{10}$" gives the median size of the granulometric distribution of material's particles (usually in micrometers for cementation materials). It means that 10% of the particles have a size less than the $d_{10}$ number and 90% of the particles have a size greater than the $d_{10}$ number. The measurement of $d_{10}$ is done by Laser diffraction analysis, also known as Laser diffraction spectroscopy, by means of Laser diffraction analyzer such as "SYMPATEC" and commercialized by the SYMPATEC company, with the dry way method.

"$d_{50}$" gives the median size of the granulometric distribution of material's particles (usually in micrometers for cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "SYMPATEC" and commercialized by the SYMPATEC company, with the dry way method.

"$d_{85}$" gives the median size of the granulometric distribution of material's particles (usually in micrometers for cementation materials). It means that 85% of the particles have a size less than the $d_{85}$ number and 15% of the particles have a size greater than the $d_{85}$ number. The measurement of $d_{85}$ is done by Laser diffraction analysis, also known as Laser diffraction spectroscopy, by means of Laser diffraction analyzer such as " SYMPATEC " and commercialized by the SYMPATEC company, with the dry way method.

"$d_{90}$" gives the median size of the granulometric distribution of material's particles (usually in micrometers for cementation materials). It means that 90% of the particles have a size less than the $d_{90}$ number and 10% of the particles have a size greater than the $d_{90}$ number. The measurement of $d_{90}$ is done by Laser diffraction analysis, also known as Laser diffraction spectroscopy, by means of Laser diffraction analyzer such as " SYMPATEC " and commercialized by the SYMPATEC company, with the dry way method.

**Brief Description of Drawings**

**Fig. 1**

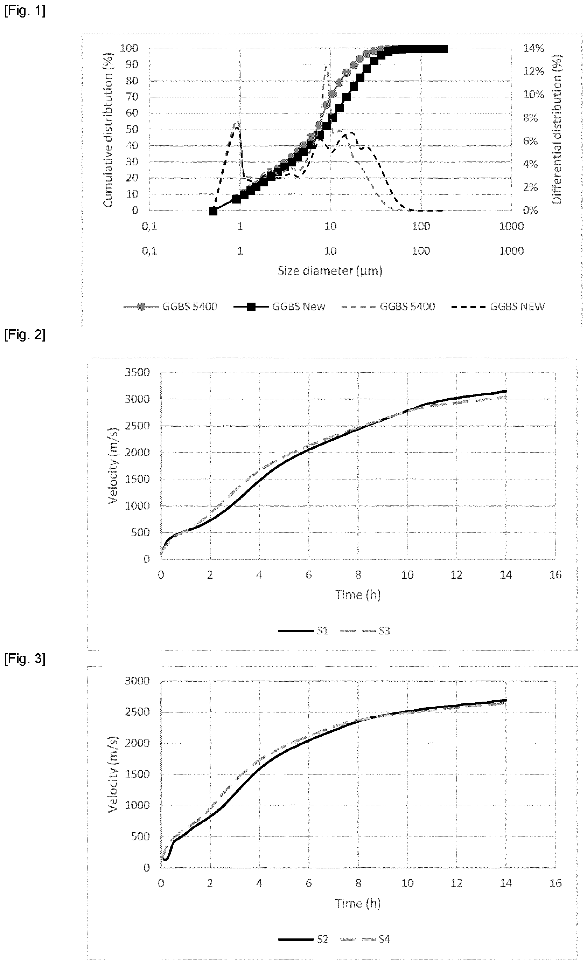

[Fig. 1] is a graph of particles size distribution.

**Fig. 2**
[Fig. 2] is a graph of velocity versus time.

**Fig. 3**
[Fig. 3] is a graph of velocity versus time.

**Fig. 4**

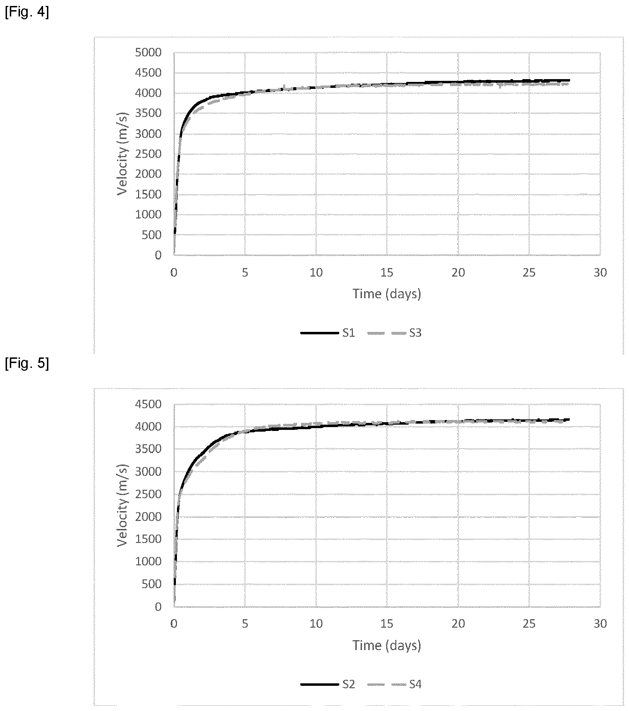

[Fig. 4] is a graph of velocity versus time.

**Fig. 5**
[Fig. 5] is a graph of velocity versus time.

**Fig. 6**

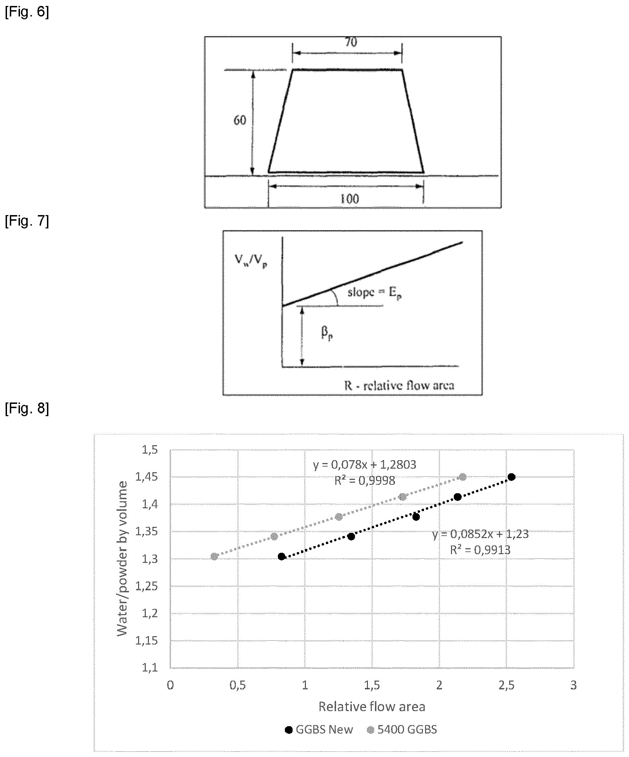

[Fig. 6] is scheme representing a cone with its dimensions of the mold used for water demand test.

**Fig. 7**
[Fig. 7] is a graph representing the linear relation between the relative flow area and the water-powder ratio.

**Fig. 8**
[Fig. 8] is a graph representing the linear relation between the relative flow area and the water-powder ratio of the GGBS according to the invention and of a standard GGBS.

**Detailed description of Embodiments**

*The Ground granulated blast furnace slag*

As mentioned above, the invention concerns a ground granulated blast furnace slag having a fineness comprised between 4500 Blaine and 6500 Blaine, characterized in that it has a $d_{50}$ between 7.5 $\mu$m and 12 $\mu$m and a $d_{85}$ between 19 $\mu$m and 29 $\mu$m.
In an embodiment the ground granulated blast furnace slag according to the invention has a $d_{10}$ between 0.5 $\mu$m and 1.7 $\mu$m.

In a preferred embodiment, the ground granulated blast furnace slag according to the invention, further has a $d_{90}$ between 25 $\mu$m and 32 $\mu$m.

In an embodiment the ground granulated blast furnace slag according to the invention has a $d_{50}$ between 8 $\mu$m and 10 $\mu$m.

In an embodiment the ground granulated blast furnace slag according to the invention has a $d_{85}$ between 21 $\mu$m and 25 $\mu$m.

In an embodiment the ground granulated blast furnace slag according to the invention has a $d_{90}$ between 27 $\mu$m and 30 $\mu$m.

Thanks to its particular granulometry, the setting time is increased the water demand is decreased for the same rheological behavior and the hydration reactivity increased compared to a ground granulated blast furnace slag of the same fineness Blaine, i.e. between 4500 Blaine and 6500 Blaine.

This particular granulometry can be obtained by controlling the grinding of the blast furnace slag.

*The hydraulic binder composition*

As mentioned above, the invention further concerns a hydraulic binder composition comprising the ground granulated blast furnace mentioned above.

The hydraulic binder composition according to the invention may comprise Portland cement, for instance in an amount of between 0.5 dry weight% and 50 dry weight %.

In an embodiment, the Portland cement is Ordinary Portland Cement (OPC) according to standard EN 197-1

The hydraulic binder composition according to the invention may futher comprise an aluminate cement in an amount of between 5 dry weight% and 35 dry weight%. The aluminate cement can be selected in the group comprising, preferably consisting of, calcium aluminate cement (CAC), calcium sulfoaluminate cement (CSA), Belite-Ye'elimite-Ferritecement (BYF) and mixtures thereof.

The calcium aluminate cement may be composed by at least one of the following crystalline form: monocalcium aluminate ($CaO.Al_2O_3$), monocalcium dialuminate ($CaO.2\,Al_2O_3$), monocalcium hexa-aluminate ($CaO.6Al_2O_3$), dicalcium alumina silicate ($2CaO.Al_2O_3.SiO_2$), tricalcium aluminate ($3CaO.Al_2O_3$), dodecacalcium hepta-aluminate ($12CaO.7Al_2O_3$), ye'elimite ($4CaO.3Al_2O_3.SO_3$), calcium aluminoferrite ($4CaO \cdot Al_2O_3 \cdot Fe_2O_3$).

The hydraulic binder composition according to the invention may additionally comprise a sulfate source in an amount of between 0,1 weight % and 30 weight %.

The sulfate source can be selected from the group comprising, preferably consisting of, calcium sulfate ($CaSO_4$), sodium sulfate ($Na_2SO_4$), potassium sulfate ($K_2SO_4$), lithium sulfate ($Li_2SO_4$) and mixtures thereof.

When the sulfate source is calcium sulfate, it may be anhydrite, hemihydrate or dihydrate, the difference resides in molecule(s) of water bounded to calcium sulfate: anhydrite no water ($CaSO_4$), hemihydrate contains half molecule of water ($CaSO_4. \frac{1}{2} H_2O$), dihydrate, also known as gypsum, contains 2 molecules of water ($CaSO_4. 2 H_2O$). According to the invention, the calcium sulfate is anhydrite calcium sulfate.

*The dry industrial mortar composition or dry concrete composition*

As mentioned above, the invention further concerns a dry industrial mortar composition or dry concrete composition, in particular mortars for tile adhesive, wall and facade, technical mortar, waterproofing membrane, and for flooring application especially screed and self levelling underlayment (SLU) comprising at least one aggregate and the hydraulic binder composition mentioned above.

According to the invention, "dry" concrete composition or "dry" industrial mortar composition refers to composition that are in the form of powder and ready to be mixed with water. In other words, the dry concrete composition or dry industrial mortar composition of the invention may content some moisture, but it essentially contains solid components which are intended to be mixed with water before its application.

Aggregates comprise a large category of particulate material used in construction, including sands, gravels, crushed stones, slag (not granulated), recycled concrete and geosynthetic aggregates. They serve as reinforcement to add strength to the overall composite material. Aggregates may comprise recycled rubber powder.

Advantageously, said dry concrete composition or dry industrial mortar composition can also include, apart from aggregates, one or several ingredients, especially functional admixtures, additions and fibres, which can be the other optional component mentioned below.

*Optional other components*

The binder composition is advantageously enriched with one or several other components which are ingredients, notably functional additives preferably selected in the following list:

EP 4 470 988 A1

• *Water retention agent.*

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

• *Rheological agent*

The possible rheological agent (also named a "thickener") is preferably chosen in the group comprising, more preferably consisting of: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

• *Defoamer/Antifoams*

The possible defoamer is preferably chosen in the group comprising, more preferably consisting of: polyether polyols and mixes thereof.

• *Biocide*

The possible biocide is preferably chosen in the group comprising, more preferably consisting of: mineral oxides like zinc oxide and mixes thereof.

• *Pigment*

The possible pigment is preferably chosen in the group comprising, more preferably consisting of: $TiO_2$, iron oxide and mixes thereof.

• *Flame retardant*

Flame retardant (or flame proof agent) makes it possible to increase the fire resistance and/or to shrink the speed of flame spreading of the composition.

• *Air-entraining agents*

Air-entraining agents (surfactants) are advantageously chosen in the group comprising, more preferably consisting of, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting of, the sulfonate olefins, the sodium lauryl sulfate and their mixes.

• *Retarders*

Retarders are advantageously chosen in the group comprising, more preferably consisting of, tartric acid and its salts: sodium or potassium salts, citric acid and its salts: sodium (trisodic citrate) and their mixes.

• Accelerators

Accelerators are advantageously chosen in the group comprising, alkaline metal salts more preferably consisting of, , sodium and potassium carbonates, sodium chloride, or calcium formate, or lithium salts.

In addition, other components may be:

• *Plasticizers*

• *Fibres*

- *Dispersion powders*

- *Polymeric resins*

- *Complexing agents*

- *Drying shrinkage reducing agents based on polyols.*

The total content of these optional other components in the dry concrete composition or dry industrial mortar composition is preferably comprised between 0.1% and 10% by weight of the total weight of the dry concrete composition or dry industrial mortar composition.

*The wet industrial mortar formulation or wet concrete formulation*

As mentioned above, the invention concerns also a wet concrete formulation or a wet industrial mortar formulation, in particular mortars for floor covering, especially self levelling underlayment (SLU) comprising at least one aggregate, hydraulic binder composition mentioned above and water.

In a specific embodiment, wet mortar formulations are so called "Ready to use" mortars. "Ready to use" mortars are used for assembling bricks or blocks on building site. They are obtained by mixing all the elements of the composition (binder, aggregates and other components) with water directly at the mixing plant. They include a set retarding agent, allowing transport and delayed use up to several days, while maintaining its rheological and hardening properties.

*The hardened industrial mortar product or hardened concrete product*

As mentioned above, the invention concerns in addition a hardened industrial mortar product or hardened concrete product obtained from the wet industrial mortar formulation or wet concrete formulation mentioned above.

*The process for preparing the wet industrial mortar formulation or the wet concrete formulation*

As mentioned above, the invention concerns also a process for preparing the wet industrial mortar formulation or the wet concrete formulation mentioned above comprising a step of mixing with water, at least one aggregate and the hydraulic binder composition mentioned above, the hydraulic binder composition being prepared before the mixing step or in situ during the mixing step the different components of the hydraulic binder composition taken separately and/or under the form of premix(es).

In other words, wet concrete formulation or wet industrial mortar formulation could be prepared by two distinct methods.

In a first method, the binder composition is prepared, and then mixed with the at least one aggregate. The dry concrete composition or dry industrial mortar composition is thereafter mixed with water.

In a second method, the wet concrete formulation or wet industrial mortar formulation is prepared by mixing in water each component of the binder composition and the aggregates.

According to the present disclosure, the term "mixing" has to be understood as any form of mixing.

In a preferred embodiment a part of the hydraulic binder composition and at least a part of the water are mixed together prior to the mixing with the aggregate.

In a preferred embodiment, the process is implemented with a ratio water to binder composition comprised between 0.1 and 1.2, advantageously between 0.15 and 0.7, and more advantageously between 0.2 and 0.4.

*The use of the hydraulic binder composition*

The invention is also directed to the use of the binder composition described above for improving the fresh state rheology, for instance fresh state yield stress and fresh state viscosity, of wet concrete formulation or wet industrial mortar formulation in particular tile adhesive, coating, assembling mortars, repair mortars, renders, technical mortars and mortars for floor covering.

Advantageously, for the use according to the invention, the mortar fresh state yield stress is comprised between 0 Pa and 200 Pa, advantageously between 5 Pa and 100 Pa and more advantageously between 30 Pa and 60 Pa.

Advantageously, for the use according to the invention, the paste fresh state viscosity is comprised between 0 Pa.s and 50 Pa.s, advantageously between 15 Pa.s and 35 Pa.s and more advantageously between 20 Pa.s and 30 Pa.s.

The invention is also directed to the use of the binder composition described above for the preparation of precast concrete or ready-mix concrete.

**Examples**

Example 1: preparation of a ground granulated blast furnace slag according to the invention (GGBS New).

GGBS new has been prepared by grinding and controlling the finesses according to the grinding process. GGBS new can be prepared also by combining and blending different steps of grinding

GGBS fineness measured by Blaine, according to the standard EN 196-6, is not a indicative parameter to be used for the new GGBS. In fact, a sample of GGBS New with fineness of 5488 Blainehas been compared to a GGBS having a fineness of 5487 Blaine (GGBS 5400), produced without selecting and controlling the Particle Size Distribution (PSD).

Figure 1 shows the particle size distributions of both GGBS New and GGBS 5400 in a cumulative and a differential percentage. It can be seen from Figure 1 that until $D_{20}$, the particle size distributions are quite similar, but that a strong difference appears at $d_{40}$. The particle size distributions have been measured with laser granulometer by dry way.

Example 2: Measurements of the Vicat setting time

Four paste samples have been prepared as follows with a ratio water/binder of 0.5:

S1: Binder: 50 weight% OPC, 50 weight% GGBS New

S2: Binder: 25 weight% OPC, 75 weight% GGBS New

S3: Binder: 50 weight% OPC, 50 weight% GGBS 5400

S4: Binder: 25 weight% OPC, 75 weight% GGBS 5400

Their setting times Vicat have been measured, according to the standard EN 196-3, and reported in table 1 below. Initial setting time correspond to the time elapsed between the moments that the water is added to the cement, to the moment that the paste starts losing its plasticity. The final setting time is the time elapsed between the moment the water is added and the one when the past completely lost it plasticity and start to be resistant.

Table 1:

| Sample | Initial setting time (minutes) | Final setting time (minutes) |
|--------|-------------------------------|------------------------------|
| S1 | 315 | 390 |
| S2 | 375 | 435 |
| S3 | 181 | 242 |
| S4 | 286 | 331 |

The setting time of sample S1 is increased compared to the setting time of sample S3.

The setting time of sample S2 is increased compared to the setting time of sample S4.

The comparative evolution of the setting time, by the ultrasounds method, during the first 12 hours are representing in figure 2 (S1 and S3) and in figure 3 (S2 and S4).

The ultrasonic test method consists of extracting automatically certain parameters of US waves recorded continuously during the setting and hardening of mortar materials. The resulting curves describe the material behaviour and are related closely to the hydration process of the mortar. These curves are linked to the elastic properties and give a comprehensive picture of the stiffening process in a way that was not accessible before. Ultrasonic measurements enables to monitor changes in the elastic properties of the cementitious materials, therefore, provides an insight into the development of the microstructure and strentghs development. The ultrasounds measurements have been performed on standard mortar according to EN 196-1 made with ordinary Portland cement replacement by GGBS up to 50% and 75%.

Comparative evolutions of the stiffening process, by the ultrasounds method, according to continued hydration and consequentely mechanical strength evolution, , during the first 28 days are representing in figures 4 (S1 and S3) and in figure 5 (S2 and S4).

It can be concluded that for a GGBS having the same fineness the particle size distribution of the GGBS according to the invention allows increasing the setting time, without decreasing the mechanical strength at 28 days.

Example 3: Water demand experiment

The test consists of a truncated cone shape mold (Figure 6) filled by the paste, in two layers, and placed on a glass plate. Then, the mold is lifted, and the spread is measured, by means of its diameters, to obtain a mean value between 140 mm and 280 mm. The procedures are then repeated for other proportions of material and of water, until enough points are reached to display the linear relation of the Figure 7.

Then, through the measurements of the average diameters (D) of the spread, the relative flow area (R) is computed with eq1.

$$R=\frac{(D^2-100^2)}{100^2}\ldots\ldots\ldots(eq1)$$

According to figure 7, a linear relationship is obtained between the relative flow area and the ratio between the water volume and the powder volume.

The ratio between the water and powder is computed through eq 2, in which there is a clear dependency with the relative flow area (R).

$$V_W/V_P = \beta_P + R * E_p\ldots\ldots\ldots(eq2)$$

The $\beta_p$ represents the water ratio, which considers the water inside the pores of the material's particles and the interstitial one between the grains. Thus, it represents the minimum quantity of water needed for a powder to become a paste. While the EP, defined as the deformation coefficient, describes the sensitivity of the paste's fluidity with the variation of water content.

It can be seen from figure 8 that GGBS New need less water than GGBS 5400 to form a paste and to obtain the same spread.

As a result, the particular particle distribution of the GGBS according to the invention allows to use less water than a standard GGBS having the same fineness for obtaining the same rheology, i.e. same spread flow according to the made test for $\beta_P$.

**Claims**

1. Ground granulated blast furnace slag having a fineness comprised between 4500 Blaine and 6500 Blaine, **characterized in that** it has a d50 between 7.5 $\mu$m and 12 $\mu$m and a d85 between 19 $\mu$m and 29 $\mu$m.

2. Ground granulated blast furnace slag according to claim 1, wherein it further has a d90 between 25 $\mu$m and 32 $\mu$m.

3. Ground granulated blast furnace slag according to claim 1, wherein it further has a d10 between 0.5 $\mu$m and 1.7 $\mu$m.

4. Ground granulated blast furnace slag according to any one of claims 1 to 3, wherein the d50 is between 8 $\mu$m and 10 $\mu$m.

5. Ground granulated blast furnace slag according to any one of claims 1 to 4, wherein the d85 is between 21 $\mu$m and 25 $\mu$m.

6. Ground granulated blast furnace slag according to any one of claims 2 to 5, wherein the d90 is between 27 $\mu$m and 30 $\mu$m.

7. Hydraulic binder composition comprising the ground granulated blast furnace slag according to any one of claims 1 to 6.

8. Hydraulic binder composition according to claim 7, wherein it comprises Portland cement.

9. Hydraulic binder composition according to any one of claims 7 or 8, wherein it comprises aluminate cement.

10. Hydraulic binder composition according to any one of claims 7 to 9, wherein it comprises between of a sulfate source.

11. Dry industrial mortar composition or dry concrete composition, comprising at least one aggregate and the hydraulic binder composition according to any one of claims 7 to 10.

12. Wet industrial mortar formulation or wet concrete formulation comprising at least one aggregate, the hydraulic binder composition according to any one of claims 7 to 10 and water.

13. Hardened industrial mortar product or hardened concrete product obtained from the wet industrial mortar formulation according to claim 12.

14. Process for preparing the wet industrial mortar formulation or wet concrete formulation according to claim 12 comprising a step of mixing with water, at least one aggregate and the hydraulic binder composition according to any one of claims 7 to 10, the hydraulic binder composition being prepared before the mixing step or in situ during the mixing step from at least some of the different components of the hydraulic binder composition taken separately and/or under the form of premix(es).

[Fig. 1]

[Fig. 2]

[Fig. 3]

[Fig. 4]

[Fig. 5]

[Fig. 6]

[Fig. 7]

[Fig. 8]

| | Europäisches Patentamt European Patent Office Office européen des brevets | **EUROPEAN SEARCH REPORT** | Application Number EP 23 17 6438 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/086781 A1 (SAINT GOBAIN WEBER [FR]) 9 May 2019 (2019-05-09) * paragraph [0032] * * claim 1 * | 1-14 | INV. C04B28/04 C04B18/141 C04B28/06 |
| A | US 2011/259246 A1 (GUYNN JOHN M [US] ET AL) 27 October 2011 (2011-10-27) * claims 1,15-16 * | 1-14 | |
| A,D | WO 2011/055063 A1 (SAINT GOBAIN WEBER [FR]; HESSELBARTH DR FRANK [DE]; DUDDA UDO [DE]) 12 May 2011 (2011-05-12) * claims * | 1-14 | |
| A | WO 2016/151388 A1 (HOLCIM TECHNOLOGY LTD [CH]) 29 September 2016 (2016-09-29) * claim 1 * * paragraph [0002] – paragraph [0011] * * paragraph [0031] – paragraph [0032] * | 1-14 | |

TECHNICAL FIELDS SEARCHED (IPC)

C04B

The present search report has been drawn up for all claims

| Place of search | Date of completion of the search | Examiner |
|---|---|---|
| Munich | 24 October 2023 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6438

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2023

| Patent document cited in search report | | Publication date | Patent family member(s) | | Publication date |
|---|---|---|---|---|---|
| WO 2019086781 | A1 | 09-05-2019 | BR | 112020007604 A2 | 29-09-2020 |
| | | | CL | 2020001087 A1 | 11-09-2020 |
| | | | CN | 111263739 A | 09-06-2020 |
| | | | EP | 3704075 A1 | 09-09-2020 |
| | | | FR | 3072959 A1 | 03-05-2019 |
| | | | PH | 12020550250 A1 | 15-02-2021 |
| | | | RU | 2020117147 A | 01-12-2021 |
| | | | SG | 11202003823S A | 28-05-2020 |
| | | | WO | 2019086781 A1 | 09-05-2019 |
| US 2011259246 | A1 | 27-10-2011 | AU | 2009302232 A1 | 15-04-2010 |
| | | | BR | PI0920370 A2 | 17-05-2016 |
| | | | CA | 2739657 A1 | 15-04-2010 |
| | | | CN | 102007085 A | 06-04-2011 |
| | | | EP | 2337769 A2 | 29-06-2011 |
| | | | JP | 5453440 B2 | 26-03-2014 |
| | | | JP | 2012505150 A | 01-03-2012 |
| | | | KR | 20110053270 A | 19-05-2011 |
| | | | RU | 2011118370 A | 20-11-2012 |
| | | | US | 2010089293 A1 | 15-04-2010 |
| | | | US | 2010313795 A1 | 16-12-2010 |
| | | | US | 2011259246 A1 | 27-10-2011 |
| | | | WO | 2010042838 A2 | 15-04-2010 |
| | | | ZA | 201102630 B | 27-06-2012 |
| WO 2011055063 | A1 | 12-05-2011 | AR | 079606 A1 | 08-02-2012 |
| | | | BR | 112012010692 B1 | 01-06-2021 |
| | | | CN | 102666423 A | 12-09-2012 |
| | | | DK | 2496533 T3 | 19-08-2019 |
| | | | EA | 201290287 A1 | 30-10-2012 |
| | | | EP | 2496533 A1 | 12-09-2012 |
| | | | EP | 3578532 A1 | 11-12-2019 |
| | | | ES | 2741587 T3 | 11-02-2020 |
| | | | FR | 2952050 A1 | 06-05-2011 |
| | | | HU | E045682 T2 | 28-01-2020 |
| | | | MY | 161585 A | 28-04-2017 |
| | | | PL | 2496533 T3 | 29-11-2019 |
| | | | PT | 2496533 T | 27-08-2019 |
| | | | SA | 110310820 B1 | 14-04-2014 |
| | | | TR | 201911164 T4 | 21-08-2019 |
| | | | UA | 107683 C2 | 10-02-2015 |
| | | | US | 2012216721 A1 | 30-08-2012 |
| | | | WO | 2011055063 A1 | 12-05-2011 |
| | | | ZA | 201202895 B | 27-12-2012 |
| WO 2016151388 | A1 | 29-09-2016 | AT | 517029 A1 | 15-10-2016 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 17 6438

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2023

| Patent document cited in search report | Publication date | Patent family member(s) | | Publication date |
|---|---|---|---|---|
| | | WO | 2016151388 A1 | 29-09-2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011055063 A1